# FASCICULE DE BREVET EUROPEEN

(11) **EP 4 767 392 B1**
(45) Date de publication et mention de la délivrance du brevet: **02.12.2026**
(21) Numéro de dépôt: 25811385.1
(22) Date de dépôt: 13.11.2025
(51) Int. Cl.: H01M 50/184, H01M 50/186, H01M 50/105, H01M 50/178, H01M 50/553

(54) **JOINT D'ÉTANCHÉITÉ POUR CELLULE ÉLECTROCHIMIQUE EN SACHET**
DICHTUNG FÜR EINE ELEKTROCHEMISCHE ZELLE IN BEUTELFORM
SEAL FOR ELECTROCHEMICAL POUCH CELL

(30) Priorité: 13.11.2024 FR 2412393
(43) Date de publication de la demande: 01.07.2026
(73) Titulaire: Verkor, 38000 Grenoble (FR)
(72) Inventeur: CHALUMEAU, Adrien, 38000 Grenoble (FR); LEYS, Côme, 38000 Grenoble (FR); ACOSTA LAISEQUILLA, Rafael, 38000 Grenoble (FR)
(74) Mandataire: Novagraaf Group
(86) Numéro de dépôt international: PCT/IB2025/061605
(87) Numéro de publication internationale: WO 2026/105031

(56) Documents cités:
- CN-U- 219 937 202

## Description

La présente invention concerne les cellules électrochimiques en sachet, dites aussi en poche, à enveloppe souple ou encore « Pouch cells » selon une terminologie anglo-saxonne.

De manière connue de l'état de la technique, une cellule électrochimique de type Pouch comporte une enveloppe extérieure ou poche contenant un empilement alterné d'électrodes négatives et d'électrodes positives séparées les unes des autres par un film séparateur poreux imbibé d'électrolyte. Deux onglets ou languettes métalliques de connexion électrique, communément appelés « tabs » en anglais, connectés aux électrodes de polarités opposées, ressortent de l'enveloppe pour servir de bornes pour les connexions électriques de la cellule électrochimique en sachet.

L'enveloppe est faite d'un matériau multicouche flexible, le plus souvent une combinaison de feuilles d'aluminium et de polymères. La face intérieure de cette enveloppe comprend généralement, au moins au niveau de ses bords de fermeture, une couche en matériau polymère thermoplastique.

En effet, une fois l'empilement d'électrodes muni des deux languettes métalliques de connexion électrique et l'électrolyte placés dans l'enveloppe, celle-ci est fermée par thermoscellage (aussi appelé thermocollage) en pressant ses bords entre deux mors chauffants, permettant de fondre les deux couches thermoplastiques en regard au niveau des bords, scellant ainsi thermiquement la cellule en sachet de sorte à ne laisser ressortir que les deux languettes métalliques de connexion électrique.

Pour renforcer l'étanchéité de la cellule électrochimique en sachet, notamment au niveau des bords où les languettes métalliques ressortent de l'enveloppe, un joint d'étanchéité prenant en sandwich chacune des deux languettes métalliques, est souvent utilisé.

Ce joint d'étanchéité vise à former une barrière étanche autour de la languette métallique en s'interposant entre celle-ci et les bords de l'enveloppe de part et d'autre de la languette métallique. Il est, d'une part, en matériau thermoplastique pour assurer une cohésion avec la couche interne de l'enveloppe lors du thermoscellage, et, d'autre part, adhésif pour garantir une liaison hermétique avec la languette métallique.

Lorsqu'il est appliqué sur une languette métallique, le joint d'étanchéité se présente sous la forme de deux bandes rectangulaires prenant en sandwich la languette métallique et se rejoignant l'une contre l'autre (c.à.d. en se superposant) au-delà des bords de celle-ci. En dépassant les bords de la languette métallique, les extensions ou « ailes » des bandes de joint (c.à.d. les portions couvrant les zones immédiatement adjacentes à la languette métallique) assurent une étanchéité accrue et un maintien en position de la languette métallique. Le document CN 219937202 U décrit également une cellule électrochimique de type pouch comprenant un élément d'étanchéité (« sealant ») 300 pertinent.

Cependant, un inconvénient des joints d'étanchéité actuels est que lors du thermoscellage des bords de l'enveloppe, la partie du joint, notamment celle aux angles, se trouvant à l'intérieur de l'enveloppe risque, sous l'effet de la chaleur :
- de se déformer, créant éventuellement des angles vifs susceptibles de compromettre l'intégrité des éléments environnants ; et/ou
- de libérer des composés à l'intérieur de l'enveloppe, susceptibles de venir en contact avec l'empilement d'électrodes et éventuellement provoquer un court-circuit et/ou de modifier des propriétés chimiques de l'électrolyte.

Un objet de la présente invention est de surmonter les inconvénients précités.

Un autre objet de la présente invention est d'éviter toute contamination extérieure susceptible de perturber les conditions prévues dans une cellule électrochimique en sachet.

A cet effet, il est proposé une cellule électrochimique en sachet comprenant
- une enveloppe comprenant au moins une électrode négative et une électrode positive séparées par un séparateur isolant et un électrolyte;
- une languette métallique de connexion électrique connectée électriquement à l'électrode négative ou à l'électrode positive, ladite languette métallique faisant saillie de l'enveloppe par un bord thermoscellé de l'enveloppe,
- un joint d'étanchéité agencé entre la languette métallique et le bord thermoscellé de sorte que l'enveloppe ne soit pas en contact direct avec la languette métallique, ce joint d'étanchéité comprenant une première partie comportant un premier bord distal, ladite première partie étant agencée à l'intérieur de l'enveloppe, et une deuxième partie comprenant un deuxième bord distal, ladite deuxième partie étant agencée en dehors de l'enveloppe, ledit joint d'étanchéité comprenant des bords latéraux reliant le premier bord distal au deuxième bord distal ;
   cellule dans laquelle, un premier bord latéral desdits bords latéraux comprend
- une première portion en forme de biseau, s'étendant dans le prolongement du premier bord distal ;
- une deuxième portion s'étendant dans le prolongement de la première portion et dans le prolongement du deuxième bord distal, ladite deuxième portion définissant avec le deuxième bord distal un angle sensiblement droit.

Diverses caractéristiques supplémentaires peuvent être prévues, seules ou en combinaison :
- la première portion définit avec le premier bord distal, un premier angle compris entre 115 degrés et 160 degrés, ledit premier angle étant mesuré selon le sens horaire ;
- un deuxième bord latéral desdits bords latéraux comprend
- une troisième portion en forme de biseau qui s'étend dans le prolongement du premier bord distal ;
- une quatrième portion qui s'étend dans le prolongement de la troisième portion et dans le prolongement du deuxième bord distal, ladite quatrième portion définissant un angle sensiblement droit avec le deuxième bord distal ;
- la troisième portion définit avec le premier bord distal, un deuxième angle compris entre -115 degrés et -160 degrés, ledit premier angle étant mesuré selon le sens horaire.
- le joint d'étanchéité comprend un premier point d'intersection entre le premier bord distal et la première portion ou la troisième portion, et
- un deuxième point d'intersection entre la première portion et la deuxième portion ou entre la troisième portion et la quatrième portion ;
- le premier point d'intersection, et/ou le deuxième point d'intersection sont arrondis ; la première portion présente une hauteur mesurée entre le premier point d'intersection et le deuxième point d'intersection, ladite hauteur étant inférieure ou égale au tiers de la largeur du joint d'étanchéité , ladite hauteur et la dite largeur étant mesurées selon un deuxième axe sensiblement perpendiculaire aux premier et deuxième bords distaux ;
   ladite hauteur est comprise entre 0.5 millimètre et 3 millimètres ;
   la première portion présente une hauteur mesurée entre le premier point d'intersection et le deuxième point d'intersection, ladite hauteur étant mesurée selon un deuxième axe sensiblement perpendiculaire aux premier et deuxième bords distaux, ladite hauteur étant comprise entre 0.5 millimètre et 3 millimètres ;
- le premier point d'intersection est agencé à une distance de la languette métallique au moins égale à deux fois l'épaisseur de la languette métallique et du joint d'étanchéité de part et d'autre de la languette métallique, ladite distance étant mesurée selon un premier axe sensiblement parallèle aux premier et deuxième bords distaux, ladite épaisseur étant mesurée selon un axe perpendiculaire à la face de plus grande surface de ladite languette métallique ;
- uniquement les bords latéraux s'étendant dans le prolongement du premier bord distal sont biseautés.

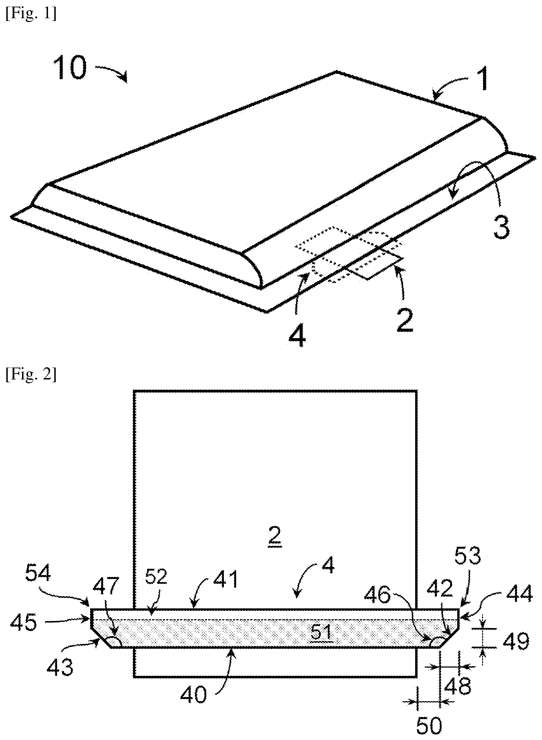

D'autres caractéristiques et avantages de l'invention apparaîtront plus clairement et de manière concrète à la lecture de la description ci-après de modes de réalisation, laquelle est faite en référence aux dessins annexés dans lesquels :
la figure [Fig.1] illustre schématiquement une cellule électrochimique en sachet selon divers modes de réalisation ;
la figure [Fig.2] illustre schématiquement un joint d'étanchéité enveloppant une languette métallique selon divers modes de réalisation.

En se référant à la [Fig.1], il est affiché une cellule **10** électrochimique en sachet comprenant une enveloppe **1** intégrant un électrolyte et au moins une électrode négative et une électrode positive séparées par un séparateur isolant (non représentés pour des raisons de clarté).

Une languette **2** métallique de connexion électrique est connectée électriquement à l'électrode négative ou à l'électrode positive. Cette languette **2** métallique fait saillie de l'enveloppe **1** par un bord **3** thermoscellé. Pour des raisons de simplification, une seule languette **2** métallique est représentée, mais la cellule **10** électrochimique comprend naturellement une seconde languette métallique de connexion électrique connectée à la seconde électrode. Les deux languettes métalliques peuvent faire saillie de l'enveloppe **1** par un même bord **3** thermoscellé ou par des bords thermoscellés différents.

Un joint **4** d'étanchéité est agencé entre la languette **2** métallique et le bord **3** thermoscellé de sorte que l'enveloppe **1** ne soit pas en contact direct avec la languette **2** métallique. Le joint **4** d'étanchéité s'interpose entre l'enveloppe **1** et la languette **2** métallique. Grâce au joint **4** d'étanchéité, la languette **2** métallique ressort de manière étanche par le bord **3** thermoscellé de l'enveloppe **1.** Dans un mode de réalisation, le joint **4** d'étanchéité est en matériau thermoplastique, tel qu'en polypropylène.

Le bord **3** de l'enveloppe est thermoscellé autour de la languette **2** métallique par l'intermédiaire du joint **4** d'étanchéité. Ce joint **4** d'étanchéité comprend, dans un mode de réalisation, une première bande et une deuxième bande prenant en sandwich la languette **2** métallique et se rejoignant l'une contre l'autre au-delà des bords de la languette **2** métallique de sorte à former une première extension du joint **4** d'étanchéité et une deuxième extension du joint **4** d'étanchéité de part et d'autre de la languette **2** métallique. Plus généralement, la languette **2** métallique est enveloppée ou prise en sandwich par le joint **4** d'étanchéité qui s'étend de part et d'autre de la languette **2** métallique sous forme d'ailes ou d'extensions.

En se reportant à la [Fig.2], le joint **4** d'étanchéité comprend une première partie **51** (représentée en hachuré sur la [Fig.2]) comportant un premier bord **40** distal, et une deuxième partie **52** comprenant un deuxième bord **41** distal. La première partie **51** est agencée à l'intérieur de l'enveloppe **1.** Dans un mode de réalisation, la première partie **51** est interposée entre la languette **2** métallique et un bord **3** thermoscellé de l'enveloppe **1.** La deuxième partie **52** est agencée en dehors de l'enveloppe **1.** Dans un mode de réalisation, la deuxième partie **52** fait saillie à partir du bord **3** thermoscellé, ou dépasse légèrement celui-ci. Le premier bord **40** distal et le deuxième bord **41** distal sont opposés l'un à l'autre, le premier bord **40** distal étant agencé à l'intérieur de l'enveloppe **1** et le deuxième bord distal **41** étant agencé en dehors de l'enveloppe **1.** Dans un mode de réalisation, le premier bord **40** distal et le deuxième bord **41** distal s'étendent selon une direction sensiblement perpendiculaire à la direction dans laquelle la languette **2** métallique fait saillie à partir de l'enveloppe **1.**

Le joint **4** d'étanchéité comprend des bords **42-45** latéraux reliant le premier bord **40** distal au deuxième bord **41** distal. Ces bords **42-45** latéraux sont disposés de part et d'autre de la languette 2 métallique. Un premier bord **42, 44** latéral desdits bords **42-45** latéraux comprend
- une première portion **42** en forme de biseau (ou en chanfrein), s'étendant dans le prolongement du premier bord **40** distal ; et
- une deuxième portion **44** s'étendant dans le prolongement de la première portion **42** et dans le prolongement du deuxième bord **41** distal. La deuxième portion **44** du premier bord **42, 44** latéral définit avec le deuxième bord **41** distal un angle sensiblement droit, formant un coin anguleux **53.** Ce coin anguleux **53** est agencé en dehors de l'enveloppe **1.**

Avantageusement, le coin anguleux **53** dans la deuxième partie **52** du joint **4** d'étanchéité permet de concentrer localement les contraintes thermomécaniques générées lors du thermoscellage. La portion **42** en forme de biseau est, à l'inverse, un réducteur de contrainte en offrant une transition géométrique progressive qui permet une répartition uniforme des contraintes thermomécaniques. Cette configuration géométrique du joint **4** d'étanchéité permet, avantageusement, d'orienter ou de canaliser des contraintes et du stress thermique lors du thermoscellage vers la deuxième partie **52** sacrificielle de sorte à préserver la première partie **51** fonctionnelle. Il en résulte avantageusement une dissipation ou une absorption contrôlée des contraintes thermomécaniques, en canalisant les effets potentiellement néfastes vers la deuxième partie **52** agencée en dehors de l'enveloppe **1** et épargner la première partie **51** du joint **4** d'étanchéité agencée à l'intérieur de l'enveloppe **1** contre toute éventuelle déformation et/ou libération de composés à l'intérieur de l'enveloppe 1.

En outre, la première portion **42** biseautée implique une réduction de l'étendue du matériau du joint **4** d'étanchéité ce qui, autrement, pourrait être à l'origine d'une libération indésirable, notamment sous l'effet de la chaleur, des composés à l'intérieur de la cellule **10** électrochimique. Un premier bord **42, 4 4** latéral biseauté est moins susceptible de se déformer sous l'effet de la chaleur, ce qui contribue à limiter davantage la libération de composés indésirables à l'intérieur de l'enveloppe **1.** Ainsi, une configuration en biseau de la première portion **42** et en angle sensiblement droit du coin anguleux **53** permet, avantageusement, de réduire les risques de dégagement/ détachement de substances susceptibles de perturber les conditions prévues (par exemple, les propriétés chimiques de l'électrolyte) dans la cellule **10** électrochimique en sachet.

Par ailleurs, le coin anguleux **53** facilite, avantageusement, la détection et la reconnaissance du joint **4** d'étanchéité par un système de vision automatique. Cette singularité géométrique génère un repère optique distinct, aisément identifiable par des algorithmes de traitement d'image, notamment lors des opérations de contrôle qualité, de positionnement ou de fabrication de la cellule **10** électrochimique. Le coin anguleux **53** constitue un marqueur géométrique fiable permettant à un système de vision automatique de déterminer avec précision l'orientation, la position et le contour du joint **4** d'étanchéité, améliorant la robustesse et la rapidité du processus de reconnaissance automatique.

Le joint **4** d'étanchéité a un contour extérieur ayant la forme d'un polygone convexe. Tous les angles intérieurs du contour extérieur du joint **4** d'étanchéité ont une mesure inférieure à 180 degrés.

La première portion **42** en forme de biseau définit avec le premier bord **40** distal un angle obtus. Dans un mode de réalisation, la première portion **42** définit avec le premier bord **40** distal, un premier angle **46** compris entre 115 degrés et 160 degrés, ce premier angle **46** étant mesuré selon le sens horaire. Il en résulte avantageusement un coin biseauté offrant une transition géométrique progressive évitant une concentration des contraintes thermomécaniques lors du thermoscellage.

Un deuxième bord **43, 4 5** latéral du joint **4** d'étanchéité comprend une troisième portion **4 3** qui s'étend dans le prolongement du premier bord **40** distal. La troisième portion **4 3** définit avec le premier bord **40** distal, un deuxième angle **47** compris entre -115 degrés et -160 degrés, ce deuxième angle **47** étant mesuré selon le sens horaire.

Le deuxième bord **43, 45** latéral comprend, en outre, une quatrième portion **4 5** qui s'étend dans le prolongement de la troisième portion **4 3** et dans le prolongement du deuxième bord **41** distal. La quatrième portion **4 5** définit un angle sensiblement droit avec le deuxième bord **41** distal, formant un coin anguleux **54.** La configuration en biseau de la troisième portion **43** et la configuration en angle sensiblement droit du coin anguleux **54** impliquent également les avantages mentionnés ci-dessus en lien avec la première portion **42** et le coin anguleux **53.**

Dans un mode de réalisation, le joint **4** d'étanchéité comprend deux portions **42, 43** en forme de biseau. Ces deux portions **42, 43** en forme de biseau sont de part et d'autre de la languette **2** métallique, à une distance prédéfinie de celle-ci. Les deux portions **42, 43** en forme de biseau sont, dans un mode de réalisation, sensiblement symétriques par rapport à un plan perpendiculaire au bord **3** thermoscellé de l'enveloppe **1.**

Dans un mode de réalisation, uniquement les bords **42, 4 3** latéraux s'étendant dans le prolongement du premier bord **40** sont biseautés. Ne se trouvant pas en contact avec la languette **2** métallique, des substances sont en effet plus susceptibles de se détacher des bords latéraux non biseautés. Lorsque seuls les bords **42, 4 3** latéraux délimitant la première partie **51** agencée à l'intérieur de l'enveloppe **1** sont biseautés, cela réduit les risques de contamination de l'intérieur de l'enveloppe **1** sans affecter les performances du joint **4** d'étanchéité.

Dans le mode de réalisation illustré par la [Fig.2], le joint **4** d'étanchéité comprend :
- un premier point d'intersection entre le premier bord **40** distal et la première portion **42** ou la troisième portion **4 3,** et
- un deuxième point d'intersection entre la première portion **42** et la deuxième portion **44** ou entre la troisième portion **4 3** et la quatrième portion **4 5.**

Le premier point d'intersection et/ou le deuxième point d'intersection sont de préférence arrondis (c.à.d. adoucis au lieu d'avoir des angles vifs ou des points anguleux). Un contour arrondi sans points anguleux permet de réduire des tensions susceptibles de se produire au niveau de ces points d'intersection sous l'effet de la chaleur du thermoscellage.

La première portion **42** (respectivement, la deuxième portion **43)** présente une longueur **48** mesurée entre le premier point d'intersection, et le deuxième point d'intersection. Cette longueur mesurée selon un premier axe sensiblement parallèle aux premier et deuxième bords **40, 41** distaux est comprise entre 1 millimètre et 4 millimètres.

La première (respectivement, la deuxième) portion **4 2** présente une hauteur **4 9** mesurée entre le premier point d'intersection et le deuxième point d'intersection inférieure ou égale au tiers de la largeur du joint **4** d'étanchéité. Dans un mode de réalisation, la hauteur **49** est comprise entre 0.5 millimètre et 3 millimètres. Cette hauteur **49** et la largeur du joint **4** d'étanchéité sont mesurées selon un deuxième axe sensiblement perpendiculaire aux premier et deuxième bords **4 0, 4 1** distaux. Les dimensions de la longueur **48** et de la hauteur **49** permettent, avantageusement, de réduire l'étendue du joint **4** d'étanchéité à l'intérieur de l'enveloppe **1** sans risque pour l'étanchéité de la sortie de la languette **2** métallique à travers du bord **3** thermoscellé.

Le premier point d'intersection est agencé à une distance **50** de la languette **2** métallique au moins égale à deux fois l'épaisseur de la languette **2** métallique et du joint **4** d'étanchéité de part et d'autre de la languette **2** métallique (autrement dit, l'épaisseur de la languette **2** métallique prise en sandwich par le joint **4** d'étanchéité). La distance **50** est mesurée selon un premier axe sensiblement parallèle au premier et deuxième bord **40, 41** distal. L'épaisseur de la languette **2** métallique est mesurée selon un axe perpendiculaire à la face de plus grande surface de ladite languette **2** métallique. Une distance **50** minimale entre le bord **42, 43** en forme de biseau et la prise en sandwich de la languette **2** métallique par le joint **4** d'étanchéité est ainsi assurée afin de ne pas impacter l'étanchéité de la sortie de la languette **2** métallique à travers du bord **3** thermoscellé. Cette distance **50** tient avantageusement compte de l'épaisseur de la languette **2** métallique et du joint **4** d'étanchéité, dans la mesure où une distance **50** plus importante est requise lorsque l'épaisseur de la languette **2** et/ou du joint **4** d'étanchéité métallique est elle-même plus grande.

Dans un mode de réalisation, le premier point d'intersection est agencé à une distance **50** au moins égale à 1 millimètre de la languette **2** métallique. Autrement dit, la première portion **42** en forme de biseau débute à une distance minimale de 1 mm de la languette **2** métallique afin de préserver l'étanchéité. Cette zone tampon spécifique avant le début de l'inclinaison du biseau interne permet de prévenir la dégradation de l'étanchéité par un biseau trop proche de la languette **2** métallique.

## Revendications

1. Cellule **(10)** électrochimique en sachet comprenant
- une enveloppe **(1)** comprenant au moins une électrode négative et une électrode positive séparées par un séparateur isolant et un électrolyte;
- une languette **(2)** métallique de connexion électrique connectée électriquement à l'électrode négative ou à l'électrode positive, ladite languette **(2)** métallique faisant saillie de l'enveloppe **(1)** par un bord **(3)** thermoscellé de l'enveloppe **(1),**
- un joint **(4)** d'étanchéité agencé entre la languette **(2)** métallique et le bord **(3)** thermoscellé de sorte que l'enveloppe **(1)** ne soit pas en contact direct avec la languette **(2)** métallique, ce joint **(4)** d'étanchéité comprenant une première partie **(51)** comportant un premier bord **(40)** distal, ladite première partie **(51)** étant agencée à l'intérieur de l'enveloppe **(1),** et une deuxième partie **(52)** comprenant un deuxième bord **(41)** distal, ladite deuxième partie **(52)** étant agencée en dehors de l'enveloppe **(1),** ledit joint **(4)** d'étanchéité comprenant des bords **(42-45)** latéraux reliant le premier bord **(40)** distal au deuxième bord **(41)** distal ; cellule **(10)** dans laquelle, un premier bord **(42, 44)** latéral desdits bords **(42-45)** latéraux comprend
- une première portion **(42)** en forme de biseau, s'étendant dans le prolongement du premier bord **(40)** distal ;
- une deuxième portion **(44)** s'étendant dans le prolongement de la première portion **(42)** et dans le prolongement du deuxième bord **(41)** distal, ladite deuxième portion **(44)** définissant avec le deuxième bord **(41)** distal un angle sensiblement droit.

2. Cellule **(10)** électrochimique en sachet selon la revendication 1, **caractérisé e en ce qu e** ladite première portion **(42)** définit avec le premier bord **(40)** distal, un premier angle **(46)** compris entre 115 degrés et 160 degrés, ledit premier angle étant mesuré selon le sens horaire.

3. Cellule **(10)** électrochimique en sachet selon la revendication 1 ou 2, **caractérisé e en ce qu'**un deuxième bord **(4 3, 4 5)** latéral desdits bords **(42-45)** latéraux comprend
- une troisième portion **(43)** en forme de biseau qui s'étend dans le prolongement du premier bord **(40)** distal ;
- une quatrième portion (45) qui s'étend dans le prolongement de la troisième portion **(4 3)** et dans le prolongement du deuxième bord **(41)** distal, ladite quatrième portion (45) définissant un angle sensiblement droit avec le deuxième bord **(41)** distal.

4. Cellule **(10)** électrochimique en sachet selon la revendication précédente, **caractérisé e en ce que** ladite troisième portion **(4 3)** définit avec le premier bord **(40)** distal, un deuxième angle **(47)** compris entre -115 degrés et -160 degrés, ledit premier angle étant mesuré selon le sens horaire.

5. Cellule **(10)** électrochimique en sachet selon la revendication 3 ou 4, **caractérisé e en ce que** le joint **(4)** d'étanchéité comprend :
- un premier point d'intersection entre le premier bord **(40)** distal et la première portion **(42)** ou la troisième portion **(4 3),** et
- un deuxième point d'intersection entre la première portion **(42)** et la deuxième portion **(44)** ou entre la troisième portion **(4 3)** et la quatrième portion **(45).**

6. Cellule **(10)** électrochimique en sachet selon la revendication précédente, **caractérisé e en ce que** le premier point d'intersection, et/ou le deuxième point d'intersection sont arrondis.

7. Cellule **(10)** électrochimique en sachet selon la revendication 5 ou 6, **caractérisé e en ce que** la première portion **(42)** présente une longueur **(48)** mesurée entre le premier point d'intersection et le deuxième point d'intersection, ladite longueur **(48)** étant mesurée selon un premier axe sensiblement parallèle aux premier et deuxième bords **(40, 41)** distaux, ladite longueur **(48)** étant comprise entre 1 millimètre et 4 millimètres.

8. Cellule **(10)** électrochimique en sachet selon l'une quelconque des revendications 5 à 7, **caractérisé e en ce que** la première portion **(42)** présente une hauteur **(49)** mesurée entre le premier point d'intersection et le deuxième point d'intersection, ladite hauteur **(49)** étant inférieure ou égale au tiers de la largeur du joint **(4)** d'étanchéité, ladite hauteur **(49)** et la dite largeur étant mesurées selon un deuxième axe sensiblement perpendiculaire aux premier et deuxième bords **(40, 41)** distaux.

9. Cellule **(10)** électrochimique en sachet selon la revendication précédente, **caractérisé e en ce que** ladite hauteur **(49)** est comprise entre 0.5 millimètre et 3 millimètres.

10. Cellule **(10)** électrochimique en sachet selon l'une quelconque des revendications 5 à 9, **caractérisé e en ce que** le premier point d'intersection est agencé à une distance **(50)** de la languette **(2)** métallique au moins égale à deux fois l'épaisseur de la languette **(2)** métallique et du joint **(4)** d'étanchéité de part et d'autre de la languette **(2)** métallique, ladite distance étant mesurée selon un premier axe sensiblement parallèle aux premier et deuxième bords **(40, 41)** distaux, ladite épaisseur étant mesurée selon un axe perpendiculaire à la face de plus grande surface de ladite languette (2) métallique.

11. Cellule **(10)** électrochimique en sachet selon l'une quelconque des revendications précédentes, **caractérisée en ce qu'**uniquement les bords **(42, 43)** latéraux s'étendant dans le prolongement du premier bord **(40)** distal sont biseautés.

## Patentansprüche

1. Elektrochemische Pouch-Zelle **(10)**, umfassend
- eine Hülle (**1**), umfassend mindestens eine negative Elektrode und eine positive Elektrode, die durch einen isolierenden Separator getrennt sind, und einen Elektrolyten;
- eine elektrische Anschlussmetalllasche (**2**), die elektrisch mit der negativen Elektrode oder der positiven Elektrode verbunden ist, wobei die Metalllasche (**2**) aus der Hülle (**1**) durch einen heißversiegelten Rand (**3**) der Hülle (**1**) herausragt,
- einen Dichtungsring (**4**), der zwischen der Metalllasche (**2**) und dem heißversiegelten Rand (**3**) angeordnet ist, sodass die Hülle (**1**) nicht mit der Metalllasche (**2**) in direktem Kontakt steht, wobei dieser Dichtungsring (**4**) einen ersten Teil (**51**) mit einem ersten distalen Rand (**40**), wobei der erste Teil (**51**) im Inneren der Hülle (**1**) angeordnet ist, und einen zweiten Teil (**52**) mit einem zweiten distalen Rand (**41**), wobei der zweite Teil (**52**) außerhalb der Hülle (**1**) angeordnet ist, umfasst, wobei der Dichtungsring (**4**) Seitenränder (**42 bis 45**) umfasst, die den ersten distalen Rand (**40**) mit dem zweiten distalen Rand (**41**) verbinden;
Zelle (**10**), in der ein erster Seitenrand (**42**, **44**) der Seitenränder (**42 bis 45**) Folgendes umfasst:
- einen ersten Abschnitt (**42**) in Form einer Abschrägung, der sich in Verlängerung des ersten distalen Randes (**40**) erstreckt;
- einen zweiten Abschnitt (**44**), der sich in Verlängerung des ersten Abschnitts (**42**) und in Verlängerung des zweiten distalen Randes (**41**) erstreckt, wobei der zweite Abschnitt (**44**) mit dem zweiten distalen Rand (**41**) einen im Wesentlichen rechten Winkel definiert.

2. Elektrochemische Pouch-Zelle (**10**) nach Anspruch **1**,
**dadurch gekennzeichnet, dass** der erste Abschnitt (**42**) mit dem ersten distalen Rand (**40**) einen ersten Winkel (**46**) zwischen 115 Grad und 160 Grad definiert, wobei der erste Winkel im Uhrzeigersinn gemessen wird.

3. Elektrochemische Pouch-Zelle (**10**) nach Anspruch 1 oder 2,
**dadurch gekennzeichnet, dass** ein zweiter Seitenrand (**43**, **45**) der Seitenränder (**42 bis 45**) Folgendes umfasst:
- einen dritten Abschnitt (**43**) in Form einer Abschrägung, der sich in Verlängerung des ersten distalen Randes (**40**) erstreckt;
- einen vierten Abschnitt (45), der sich in Verlängerung des dritten Abschnitts (**43**) und in Verlängerung des zweiten distalen Randes (**41**) erstreckt, wobei der vierte Abschnitt (45) einen im Wesentlichen rechten Winkel mit dem zweiten distalen Rand (**41**) definiert.

4. Elektrochemische Pouch-Zelle (**10**) nach dem vorstehenden Anspruch, **dadurch gekennzeichnet, dass** der dritte Abschnitt (**43**) mit dem ersten distalen Rand (**40**) einen zweiten Winkel (**47**) zwischen -115 Grad und -160 Grad definiert, wobei der erste Winkel im Uhrzeigersinn gemessen wird.

5. Elektrochemische Pouch-Zelle (**10**) nach Anspruch 3 oder 4,
**dadurch gekennzeichnet, dass** der Dichtungsring (**4**) Folgendes umfasst:
- einen ersten Schnittpunkt zwischen dem ersten distalen Rand (**40**) und dem ersten Abschnitt (**42**) oder dem dritten Abschnitt (**43**), und
- einen zweiten Schnittpunkt zwischen dem ersten Abschnitt (**42**) und dem zweiten Abschnitt (**44**) oder zwischen dem dritten Abschnitt (**43**) und dem vierten Abschnitt (**45**).

6. Elektrochemische Pouch-Zelle (**10**) nach dem vorstehenden Anspruch, **dadurch gekennzeichnet, dass** der erste Schnittpunkt und/oder der zweite Schnittpunkt abgerundet sind.

7. Elektrochemische Pouch-Zelle (**10**) nach Anspruch 5 oder 6,
**dadurch gekennzeichnet, dass** der erste Abschnitt (**42**) eine Länge (**48**) aufweist, die zwischen dem ersten Schnittpunkt und dem zweiten Schnittpunkt gemessen wird, wobei die Länge (**48**) entlang einer ersten Achse gemessen wird, die im Wesentlichen parallel zu dem ersten und zweiten distalen Rand (**40**, **41**) verläuft, wobei die Länge (**48**) zwischen 1 Millimeter und 4 Millimetern beträgt.

8. Elektrochemische Pouch-Zelle (**10**) nach einem der Ansprüche 5 bis 7, **dadurch gekennzeichnet, dass** der erste Abschnitt (**42**) eine Höhe (**49**) aufweist, die zwischen dem ersten Schnittpunkt und dem zweiten Schnittpunkt gemessen wird, wobei die Höhe (**49**) kleiner oder gleich einem Drittel der Breite des Dichtungsrings (**4**) ist, wobei die Höhe (**49**) und die Breite entlang einer zweiten Achse gemessen werden, die im Wesentlichen senkrecht zu dem ersten und dem zweiten distalen Rand (**40**, **41**) verläuft.

9. Elektrochemische Pouch-Zelle (**10**) nach dem vorstehenden Anspruch, **dadurch gekennzeichnet, dass** die Höhe (**49**) zwischen 0,5 Millimeter und 3 Millimeter beträgt.

10. Elektrochemische Pouch-Zelle (**10**) nach einem der Ansprüche 5 bis 9, **dadurch gekennzeichnet, dass** der erste Schnittpunkt in einem Abstand (**50**) von der Metalllasche (**2**) angeordnet ist, der mindestens gleich dem Zweifachen der Dicke der Metalllasche (**2**) und dem Dichtungsring (**4**) auf beiden Seiten der Metalllasche (**2**) ist, wobei der Abstand entlang einer ersten Achse gemessen wird, die im Wesentlichen parallel zu dem ersten und zweiten distalen Rand (**40**, **41**) ist, wobei die Dicke entlang einer Achse, die senkrecht zu der Seite mit der größten Oberfläche der Metalllasche (**2**) ist, gemessen wird.

11. Elektrochemische Pouch-Zelle (**10**) nach einem der vorstehenden Ansprüche, **dadurch gekennzeichnet, dass** nur die Seitenränder (**42**, **43**), die sich in Verlängerung des ersten distalen Randes (**40**) erstrecken, abgeschrägt sind.

## Claims

1. Electrochemical pouch cell **(10)** comprising
- a casing (**1**) comprising at least one negative electrode and one positive electrode separated by an insulating separator, and an electrolyte;
- a metal electrical connection tab (**2**) electrically connected to the negative electrode or to the positive electrode, said metal tab (**2**) projecting from the casing (**1**) through a heat-sealed edge (**3**) of the casing (**1**),
- a seal (**4**) arranged between the metal tab (**2**) and the heat-sealed edge (**3**) so that the casing (**1**) is not in direct contact with the metal tab (**2**), said seal (**4**) comprising a first part (**51**) having a first distal edge (**40**), said first part (**51**) being arranged inside the casing (**1**), and a second part (**52**) comprising a second distal edge (**41**), said second part (**52**) being arranged outside the casing (**1**), said seal (**4**) comprising side edges (**42-45**) connecting the first distal edge (**40**) to the second distal edge (**41**);
cell (**10**) wherein a first side edge (**42**, **44**) of said side edges (**42**-**45**) comprises
- a first portion (**42**) having a beveled shape and extending from the first distal edge (**40**);
- a second portion (**44**) extending from the first portion (**42**) and from the second distal edge (**41**), said second portion (**44**) defining a substantially right angle with the second distal edge (**41**).

2. Electrochemical pouch cell (**10**) according to claim 1,
**characterized in that** said first portion (**42**) defines a first angle (**46**) with the first distal edge (**40**) of between 115 degrees and 160 degrees, said first angle being measured in a clockwise direction.

3. Electrochemical pouch cell (**10**) according to claim 1 or 2,
**characterized in that** a second side edge (**43**, **45**) of said side edges (**42-45**) comprises
- a third portion (**43**) having a beveled shape and extending from the first distal edge (**40**);
- a fourth portion (45) which extends from the third portion (**43**) and from the second distal edge (**41**), said fourth portion (45) defining a substantially right angle with the second distal edge (**41**).

4. Electrochemical pouch cell (**10**) according to the preceding claim, **characterized in that** said third portion (**43**) defines a second angle (**47**) with the first distal edge (**40**) of between -115 degrees and -160 degrees, said first angle being measured in a clockwise direction.

5. Electrochemical pouch cell (**10**) according to claim 3 or 4,
**characterized in that** the seal (**4**) comprises: - a first point of intersection between the first distal edge (**40**) and the first portion (**42**) or the third portion (**43**), and - a second point of intersection between the first portion (**42**) and the second portion (**44**) or between the third portion (**43**) and the fourth portion (**45**).

6. Electrochemical pouch cell (**10**) according to the preceding claim, **characterized in that** the first point of intersection and/or the second point of intersection are rounded.

7. Electrochemical pouch cell (**10**) according to claim 5 or 6,
**characterized in that** the first portion (**42**) has a length (**48**) measured between the first point of intersection and the second point of intersection, said length (**48**) being measured along a first axis substantially parallel to the first distal edge and the second distal edge (**40**, **41**), said length (**48**) being between 1 millimeter and 4 millimeters.

8. Electrochemical pouch cell (**10**) according to any of claims 5 to 7, **characterized in that** the first portion (**42**) has a height (**49**) measured between the first point of intersection and the second point of intersection, said height (**49**) being less than or equal to one third of the width of the seal (**4**), said height (**49**) and said width being measured along a second axis substantially perpendicular to the first distal edge and the second distal edge (**40**, **41**).

9. Electrochemical pouch cell (**10**) according to the preceding claim, **characterized in that** said height (**49**) is between 0.5 millimeters and 3 millimeters.

10. Electrochemical pouch cell (**10**) according to any of claims 5 to 9, **characterized in that** the first point of intersection is arranged at a distance (**50**) from the metal tab (**2**), which distance is at least equal to twice the thickness of the metal tab (**2**) and of the seal (**4**) on either side of the metal tab (**2**), said distance being measured along a first axis substantially parallel to the first distal edge and the second distal edge (**40**, **41**), and said thickness being measured along an axis perpendicular to the face having the largest surface area of said metal tab (**2**).

11. Electrochemical pouch cell (**10**) according to any of the preceding claims, **characterized in that** only the side edges (**42**, **43**) extending from the first distal edge (**40**) are beveled.
